# EUROPEAN PATENT APPLICATION

(11) **EP 2 075 968 A2**
(43) Date of publication of application: **01.07.2009**
(21) Application number: 08275040.7
(22) Date of filing: 28.07.2008
(51) Int. Cl.: H04L 12/58

(54) **Communication system and method**

(30) Priority: 26.07.2007 GB 0714623
(71) Applicant: Affle Limited, 1 Stanford Road London W8 5PP (GB)
(72) Inventor: Hazra, Sukanta, London, Greater London W8 5PP (GB)
(74) Representative: Exell, Jonathan Mark

(57) **Abstract**

A communication system and method are disclosed. The system includes a client application executable on a first communication node and a data repository. The client application is configured to accept an identifier of a file to be communicated to a remote recipient, and to store the file in the data repository. The application generates and transmits a textual message including a link to the file in the data repository using a text based protocol to a remote recipient.

## Description

### Field of the Invention

The present invention relates to a communication system and method that is particularly applicable to mobile phones.

### Background to the invention

Text Messaging is the term used to refer to systems such as the Short Messaging Service (SMS) that is provided on devices such as mobile telephones to transmit short text messages to a remote recipient which also supports the system. Due to the simplistic nature of the devices (and originally the limited data bandwidth available on networks), SMS implementations were limited to messages consisting solely of textual characters. The messages often have character count limits such as 160 in the case of Short Message Service (SMS).

To outline the steps in the regular text messaging process:
1) Alice opens up her text messaging composition screen on her phone
2) Alice composes her message, eg: "Hi bob, how are you?" and selects Bob as the recipient.
3) Alice sends the message destined for Bob
4) Alice's operator receives the message and routes it to Bob's operator who in turn send the message to Bob
5) Bob receives a notification of a new message
6) Bob opens the message from his Inbox

Extensions to the SMS protocol have been suggested including the MMS protocol that allows multimedia to be transmitted. However, these extensions are not supported by all devices and networks.

The messages of these extended protocols are often called "Multimedia Messages", however these message types are differ from network to network, generally require a specific application on the phone to send/receive them and do not use the existing text messaging protocols or applications.

### Statement of Invention

According to an aspect of the present invention, there is provided a communication system comprising a client application executable on a first communication node and a data repository, wherein the client application is configured to accept an identifier of a file to be communicated to a remote recipient, the client application being configured to automatically store the file in the data repository and being further configured to generate a textual message including a link to the file in the data repository and transmit the textual message using a text based protocol to a remote recipient.

Preferably, the textual message comprises a short messaging service, SMS, message.

The file may comprise multimedia content.

Preferably, the data repository is remote of the first communication node. Alternatively, the data repository may be on the first communication node.

The data repository may be configured to receive a file to be stored and is configured to provide a link to the first communication node, the file being accessible at the data repository via the link, the client application being configured to receive the link and insert it in the textual message.

The data repository may be arranged to generate a random identifier associated with the file, the link including the random identifier.

The data repository may be arranged to receive a password to be associated with the file and is configured to allow access to the file only upon receipt of the password.

The client application may be a plug-in for an existing short messaging service application on the first communication node.

The client application may be arranged to interface with an existing short messaging service application on the communication node to transmit the textual message.

According to another aspect of the present invention, there is provided a communication method comprising:
accepting, at a client application on a first communication node, an identifier of a file to be communicated to a remote recipient;
automatically uploading the file from the client application to a data repository; generating, at the client application, a textual message including a link to the file in the data repository; and,
transmitting the textual message using a text based protocol to a remote recipient.

The method may further comprise:
receiving, at the data repository, a file to be stored;
providing, from the data repository to the uploading client application, a link to the received file, the file being accessible at the data repository via the link;
wherein the step of generating the textual message includes the steps of receiving the link and inserting it in the textual message.

The step of receiving the file may include:
generating a substantially random identifier associated with the file; and, generating a link including the random identifier.

The method may further comprise:
receiving, at the data repository from the first communication node, a password to be associated with the file; and,
allowing access to the file at the data repository via the link only upon receipt of the password.

The step of transmitting may further comprise:
interfacing with an existing short messaging service application on the communication node to transmit the textual message.

According to another embodiment of the present invention, there is provided a computer-readable medium encoded with a computer program, the computer program comprising:
computer program code for accepting, at a client application on a first communication node, an identifier of a file to be communicated to a remote recipient;
computer program code for automatically uploading the file from the client application to a data repository;
computer program code for generating, at the client application, a textual message including a link to the file in the data repository; and,
computer program code for transmitting the textual message using a text based protocol to a remote recipient.

The computer program may further comprise:
computer program code for receiving, at the data repository, a file to be stored;
computer program code for providing, from the data repository to the uploading client application, a link to the received file, the file being accessible at the data repository via the link;
wherein the computer program code for generating the textual message includes computer program code for receiving the link and inserting it in the textual message.

The computer program may further comprise:
computer program code for generating a substantially random identifier associated with the file; and,
computer program code for generating a link including the random identifier.

In an embodiment of the present invention, there is provided a method for attaching multimedia to an enhanced version of a text messaging application. This enhanced version combines both Text Messaging and Data Services to allow seamless sending and receiving of multimedia within regular text messages using a New Text Messaging (NTM) application.

The present invention seeks to use existing the text messaging protocols such as SMS in conjunction with a Data Service (DS) to deliver multimedia files. The current implementation by operators is just the opposite: ie, they have a multi-media protocol that is used to send regular messages and multimedia messages. Using the multimedia protocol rather than the text messaging protocol has many disadvantages - one example is that it requires a separate Multi-Media messaging application, another is that all intermediate nodes and networks must support the protocol.

In addition to text messages, most operators support a separate mechanism for retrieving other multimedia through web browser type applications. These applications use a different Data Service (DS) protocol. For example, in the case of GSM network, a protocol called General Packet Radio Service (GPRS) is used. These protocols let the user browse websites and interact with them. This patent application only uses GPRS illustratively, and can be applied to other data services such as CDMA and 3G.

Existing text messaging applications have the ability to parse out web links from a message and make them clickable using the "Autofind" feature of the messaging applications. For example, if someone sends the link http://www.yahoo.com inside the text message, the user can click the link and launch their phone's web browser application.

While users are able to launch links from within their text messaging application, as shown with the www.yahoo.com example above, text messaging applications do not allow for seamlessly attaching multimedia to a text message. This is because text messaging was originally designed just for simple text and not for interacting with data networks using GPRS or some other data service protocol.

### Brief Description of the Drawings

Embodiments of the present invention will now be described, by way of example only, with reference to the accompanying drawing in which:

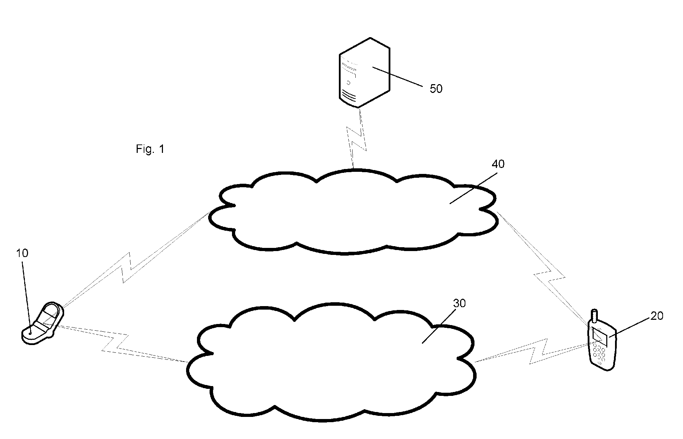

Figure 1 is a schematic diagram of a messaging system according to an embodiment of the present invention.

### Detailed Description

Figure 1 is a schematic diagram of a messaging system according to an embodiment of the present invention.

The messaging system includes a transmitting node 10, a recipient node 20, a mobile telephony network 30, a data network 40 and a content server 50.

A user (Alice), at the transmitting node 10 wishes to communicate a message including multimedia data to Bob at the recipient node 20. The following is a description of the steps involved in attaching a multimedia file to a regular text message:
1) Alice opens an ehanced text messaging application on the transmitting node 10
2) Alice types a short message such as
   a. "Hi Bob, checkout this picture"
3) Alice selects Bob as a recipient
4) Alice selects "Options->Attach->Picture" (or some equivalent depending the mobile device User Interface)
5) The enhanced text messaging application uploads the file to the content server 50 via the data network 40 (such as GPRS)
6) Upon completion of the upload the content server 50 provides an ID number or URL to the enhanced text messaging application that links to the file uploaded. This link will preferably have a random string associated that will be computationally difficult to reproduce. Alternatively, this link can be pre-computed and sent to the client ahead of time. This is to ensure privacy of the link. The link may be similar to the following (for illustrative purposes only): http://www.contentserver.com/id/<unigue random id>
7) Alice can be given the option to protect the Attachment with a Personal Identification Number(PIN) or password that will be enforced by the content server 50 when someone tries to access the link.
8) Alice's enhanced text messaging application then sends a regular text message (such as an SMS format message) to Bob that contains the original message, and automatically appends the URL to the end of the message. For example, her text message will contain:
   "Hi Bob, checkout this picture
      http://www.contentserver.com/id/<unigue random id>"
9) Bob's non-enhanced text messaging application receives the message. The application's "Autofind" features recognizes that there is an embedded web link and he is able to launch a browser and download the content assuming that he has Data Services enabled on his phone.

The recipient, (in this case, Bob), does not need the enhanced messaging application because the enhanced application at the transmitting node 10 has done work of linking the multimedia file location to the text-message in a way that is accessible to regular text messaging applications. Bob cannot however attach multimedia files to his messages because he does not have the enhanced application that implements the new content linking system described above. Bob can forward the message to other recipients and they will be able to retrieve the content too because the enhanced application has done the work of consolidating the multimedia file location into a text message in a location that is accessible to anyone with Data Services enabled. If a password is required, the second person to try accessing the file will need to be able to enter it.

The Sender can have the ability to limit the number of times the file may be downloaded to help protect it from unauthorized copying.

It will be appreciated that embodiments of the present invention can be implemented using both stand-alone messaging applications and also existing messaging applications that are enhanced via plug-ins or the like. A further alternative would be that an enhanced interface may provide editing capabilities but use existing applications to perform communication. In either case, the interface would provide a new menu enabling attachments which may include, but are not limited to: Picture formats; Video formats; Audio formats, and Files.

The content server 50 may be a dedicated device/service for the messaging system or an existing file storage system may be utilized. In a preferred embodiment, the content server 50 may publish multimedia files for download at publicly available links that only the recipient of the text message is aware of. The content server 50 can optionally include simple password authentication for specific files if the user wishes. The content server may be hosted by the transmitting device 10.

It will be appreciated that the mobile telephony network 30 and the data network 40 may be the same network.

## Claims

1. A communication system comprising a client application executable on a first communication node and a data repository, wherein the client application is configured to accept an identifier of a file to be communicated to a remote recipient, the client application being configured to automatically store the file in the data repository and being further configured to generate a textual message including a link to the file in the data repository and transmit the textual message using a text based protocol to a remote recipient.

2. A communication system according to claim 1, wherein the textual message comprises a short messaging service, SMS, message.

3. A communication system according to claim 1 or 2, wherein the file comprises multimedia content.

4. A communication system according to claim 1, 2 or 3, wherein the data repository is remote of the first communication node.

5. A communication system according to claim 1, 2 or 3, wherein the data repository is on the first communication node.

6. A communication system according to any preceding claim, wherein the data repository is configured to receive a file to be stored and is configured to provide a link to the first communication node, the file being accessible at the data repository via the link, the client application being configured to receive the link and insert it in the textual message.

7. A communication system according to claim 6, wherein the data repository is arranged to generate a random identifier associated with the file, the link including the random identifier.

8. A communication system according to claim 6 or 7, wherein the data repository is arranged to receive a password to be associated with the file and is configured to allow access to the file only upon receipt of the password.

9. A communication system according to any preceding claim, wherein the client application is a plug-in for an existing short messaging service application on the first communication node.

10. A communication system according to any of claims 1 to 8, wherein the client application is arranged to interface with an existing short messaging service application on the communication node to transmit the textual message.

11. A communication method comprising:
accepting, at a client application on a first communication node, an identifier of a file to be communicated to a remote recipient;
automatically uploading the file from the client application to a data repository; generating, at the client application, a textual message including a link to the file in the data repository; and,
transmitting the textual message using a text based protocol to a remote recipient.

12. A method according to claim 11, wherein the textual message comprises a short messaging service, SMS, message.

13. A method according to claim 11 or 12, further comprising:
receiving, at the data repository, a file to be stored;
providing, from the data repository to the uploading client application, a link to the received file, the file being accessible at the data repository via the link;
wherein the step of generating the textual message includes the steps of receiving the link and inserting it in the textual message.

14. A method according to claim 13, wherein the step of receiving the file includes:
generating a substantially random identifier associated with the file; and, generating a link including the random identifier.

15. A method according to claim 13 or 14, further comprising:
receiving, at the data repository from the first communication node, a password to be associated with the file; and,
allowing access to the file at the data repository via the link only upon receipt of the password.
